# EUROPÄISCHE PATENTSCHRIFT

(11) **EP 3 768 923 B1**
(45) Veröffentlichungstag und Bekanntmachung des Hinweises auf die Patenterteilung: **25.02.2026**
(21) Anmeldenummer: 19712939.8
(22) Anmeldetag: 18.03.2019
(51) Int. Cl.: E05B 81/16, E05B 81/88, E05B 81/82, E05B 81/80

(54) **STEUERANORDNUNG FÜR EINE KRAFTFAHRZEUGTÜR**
CONTROL ASSEMBLY FOR A MOTOR VEHICLE DOOR
ENSEMBLE DE COMMANDE POUR UNE PORTIÈRE DE VÉHICULE AUTOMOBILE

(30) Priorität: 19.03.2018 DE 102018106410
(43) Veröffentlichungstag der Anmeldung: 27.01.2021
(73) Patentinhaber: Brose Fahrzeugteile SE & Co. Kommanditgesellschaft, Bamberg, 96052 Bamberg (DE)
(72) Erfinder: FRANEK, Stefan, 96269 Großheirath (DE)
(74) Vertreter: Gottschald Patentanwälte Partnerschaft mbB
(86) Internationale Anmeldenummer: PCT/EP2019/056649
(87) Internationale Veröffentlichungsnummer: WO 2019/179910

(56) Entgegenhaltungen:
- EP-A1- 3 441 267
- EP-A2- 2 425 516
- WO-A1-2013/103943
- WO-A1-2019/030339
- DE-A1- 10 206 968
- DE-A1- 102013 002 747
- DE-A1- 102014 105 872
- FR-A1- 2 917 112
- US-B2- 9 118 193

## Beschreibung

Die Erfindung betrifft eine Steueranordnung für eine Kraftfahrzeugtür gemäß dem Oberbegriff von Anspruch1, eine Kraftfahrzeugtür mit einer solchen Steueranordnung gemäß Anspruch 13, ein Kraftfahrzeug mit einer solchen Kraftfahrzeugtür gemäß Anspruch 15 sowie ein Verfahren für die Ansteuerung einer Kraftfahrzeugtür gemäß dem Oberbegriff von Anspruch 16.

Die Kraftfahrzeugtüren heutiger Kraftfahrzeuge sind zunehmend mit sogenannten "Elektroschlössern" ausgestattet, die sich ausschließlich elektrisch mittels eines elektrischen Öffnungsantriebs öffnen lassen. Während dies durch den Wegfall von Betätigungskräften mit einer beträchtlichen Komfortsteigerung einhergeht, sind für den Notfall, insbesondere für den Ausfall der Bordnetzspannung, zusätzliche Maßnahmen zur Erhaltung der Betriebssicherheit zu treffen.

Bei einer bekannten Steueranordnung (DE 10 2014 105 872 A1) ist jeder Kraftfahrzeugtür ein Kraftfahrzeugschloss mit einer Schlossfalle, einer der Schlossfalle zugeordneten Sperrklinke und einem elektrischen Öffnungsantrieb zum motorischen Ausheben der Sperrklinke zugeordnet. Das Kraftfahrzeugschloss ist mit einem zusätzlichen Energiespeicher ausgestattet, der bei Ausfall der Bordnetzspannung die elektrische Versorgung des Öffnungsantriebs übernimmt. Nachteilig hierbei ist die Tatsache, dass das ständige Nachladen des Energiespeichers aufwendig ist und dass eine hohe Zuverlässigkeit nur durch einen regelmäßigen Austausch des Energiespeichers gewährleistet werden kann.

Die bekannte Steueranordnung (US 9118193 B2), von der die Erfindung ausgeht, ist bei Ausfall der Bordnetzspannung von einer Normalbetriebsart in eine Notbetriebsart überführbar, in der der Bezug von elektrischer Leistung von einem Mobiltelefon vorgesehen ist. Hierfür ist die Steueranordnung mit einer Leistungsübertragungseinheit mit einem Leistungsstecker ausgestattet, an den das Mobiltelefon zur Übertragung elektrischer Leistung anschließbar ist. Diese Lösung ist bedientechnisch aufwendig und erfordert einen hohen Realisierungsaufwand.

Eine Ladestation für ein Mobiltelefon, die von einem Türmodul einer Kraftfahrzeugtür bereitgestellt wird, ist aus der DE 10 2013 002 747 A1 bekannt. Hiermit ist sichergestellt, dass ein eventuell vorhandenes Mobiltelefon stets drahtlos geladen werden kann, so dass bei Ausfall der Bordnetzspannung die Möglichkeit besteht, telefonisch Hilfe herbeizurufen. Eine Verbesserung der fahrzeugtechnischen Funktion bei Ausfall der Bordnetzspannung ist damit allerdings nicht verbunden. Drahtlose Signal- und Energieübertragungssysteme sind aus der WO 2013/103943 A1, der EP 2 425 516 A2, der FR 2 917 112 A1 und der DE 102 69 68 A1 bekannt.

Der Erfindung liegt das Problem zu Grunde, die bekannte Steueranordnung derart auszugestalten und weiterzubilden, dass im Notfall ein Öffnen der Kraftfahrzeugtür auf bedientechnisch einfache Art und Weise garantiert ist.

Das obige Problem wird bei einer Steueranordnung gemäß dem Oberbegriff von Anspruch 1 durch die Merkmale des kennzeichnenden Teils von Anspruch 1 gelöst.

Wesentlich ist die grundsätzliche Überlegung, dass der Empfang elektrischer Leistung von dem Mobilgerät, das hier als "Mobilgerät erster Art" bezeichnet wird, drahtlos empfangen werden kann. Damit erübrigen sich jegliche Leistungsstecker zur Übertragung von elektrischer Leistung. Ferner besteht die grundsätzliche Möglichkeit, im Fahrzeuginnenraum bereits vorhandene Ladestationen für Mobilgeräte, insbesondere für Mobiltelefone, für den Empfang elektrischer Leistung zu nutzen.

Im Einzelnen wird vorgeschlagen, dass die Leistungsübertragungseinheit für den drahtlosen Empfang von elektrischer Leistung von dem Mobilgerät erster Art eingerichtet ist und dass die Türsteuereinheit eingerichtet ist, in der Notbetriebsart über die Leistungsübertragungseinheit elektrische Leistung von dem Mobilgerät erster Art zu empfangen und mit der empfangenen elektrischen Leistung den Öffnungsantrieb zum Ausheben der Sperrklinke anzusteuern.

Die Türsteuereinheit kann mit einem Mikrocontroller ausgestattet sein, der für einen vorbestimmten Ablauf bei der Ansteuerung des Öffnungsantriebs sorgt. Grundsätzlich kann die Türsteuereinheit aber auch ein einfaches Leitungsnetzwerk sein, über das je nach Betriebsart der Empfang und die Weiterleitung elektrischer Leistung möglich ist.

Eine bevorzugte Doppelnutzung der Leistungsübertragungseinheit ist Gegenstand von Anspruch 2. Hier ist es vorgesehen, dass die Leistungsübertragungseinheit nicht nur zum drahtlosen Empfang elektrischer Leistung, sondern auch für die drahtlose Abgabe elektrischer Leistung an das Mobilgerät erster Art oder an ein Mobilgerät zweiter Art eingerichtet ist. Bei der Leistungsübertragungseinheit kann es sich beispielsweise um eine Ladestation gemäß Anspruch 3 handeln, der nunmehr die Zusatzfunktion des drahtlosen Empfangs elektrischer Leistung in der Notbetriebsart zukommt.

Bei dem Mobilgerät erster Art handelt es sich bei der weiter bevorzugten Ausgestaltung gemäß Anspruch 4 um ein Mobilgerät für die drahtlose Abgabe elektrischer Leistung, beispielsweise um eine Powerbank. Grundsätzlich kann es sich hier auch um ein Mobiltelefon handeln, soweit dies eingerichtet ist, elektrische Leistung drahtlos abzugeben.

Das Mobilgerät zweiter Art ist gemäß Anspruch 5 dagegen für den drahtlosen Empfang elektrischer Leistung eingerichtet. Hier kann es sich um ein entsprechend ausgestattetes Mobiltelefon handeln.

Beispielsweise ist es mit der vorschlagsgemäßen Lösung denkbar, dass die Leistungsübertragungseinheit in der Normalbetriebsart dem Laden des Mobilgeräts zweiter Art, beispielsweise eines Mobiltelefons, dient, während die Leistungsübertragungseinheit in der Notbetriebsart dem Empfang elektrischer Leistung von dem Mobilgerät erster Art, beispielsweise einer Powerbank, dient. Die Vorteilhaftigkeit der Doppelnutzung der Leistungsübertragungseinheit tritt hier besonders deutlich zutage.

Um zu vermeiden, dass ein ungewünschtes Entladen des jeweiligen Mobilgeräts über die Leistungsübertragungseinheit stattfindet, ist es gemäß Anspruch 6 vorzugsweise vorgesehen, dass vor dem Entladen eine benutzerseitige Quittierung notwendig ist.

Weiter vorzugsweise besteht eine notwendige Bedingung für das motorische Öffnen des Kraftfahrzeugschlosses gemäß Anspruch 7 darin, dass benutzerseitig ein elektrisches Türbetätigungselement betätigt worden ist. Damit wird sichergestellt, dass der Bediener von dem motorischen Öffnen des Kraftfahrzeugschlosses in der Notbetriebsart nicht überrascht wird.

Bei der ebenfalls bevorzugten Ausgestaltung gemäß Anspruch 8 kommt der Leistungsübertragungseinheit eine weitere Funktion zu, nämlich dem Aufbau einer drahtlosen Kommunikationsstrecke zu dem Mobilgerät. Hiermit ist es grundsätzlich möglich, einen Authentifizierungsdialog ablaufen zu lassen, dessen Ausgang darüber entscheidet, ob elektrische Leistung von dem jeweiligen Mobilgerät empfangen werden darf oder nicht.

Grundsätzlich kann die empfangene elektrische Leistung direkt, also ohne Zwischenspeicherung, an die Türsteuereinheit und/oder den Öffnungsantrieb weitergeleitet werden (Anspruch 9). Alternativ ist es aber auch denkbar, dass für die Zwischenspeicherung der empfangenen Leistung ein Energie-Zwischenspeicher vorgesehen ist. Während die erstgenannte Lösung kostengünstig realisierbar ist, lässt sich mit der zweitgenannten Lösung eine noch höhere Betriebssicherheit erzielen, da durch die Zwischenspeicherung eventuelle Leistungsschwankungen der von dem Mobilgerät empfangenen elektrischen Leistung keine Rolle spielen.

Die bevorzugten Ausgestaltungen gemäß Anspruch 11 betreffen Möglichkeiten für die Definition des vorbestimmten Notfalls, dessen Erfassung die Überführung der Steueranordnung in die Notbetriebsart auslöst. In einer bevorzugten Ausgestaltung geht die Erfassung des Notfalls darauf zurück, dass die Steueranordnung ein Crashsignal von einem Crashsensor empfängt. Alternativ kann der Notfall dadurch definiert sein, dass die Bordnetzspannung unter eine vorbestimmte Mindestschwelle fällt.

Insbesondere für den Crashfall kann es vorteilhaft sein, wenn, wie in Anspruch 12 vorgeschlagen, die Steueranordnung in der Notbetriebsart über eine Ein-/Ausgabeeinheit eine Aufforderung an den Bediener abgibt, ein Mobilgerät in die Ladestation einzusetzen. Diese Aufforderung kann insbesondere auch akustisch, beispielsweise durch eine Sprachausgabe, erfolgen. Mit dieser Maßnahme wird die Wahrscheinlichkeit erhöht, dass auf die innerhalb des Kraftfahrzeugs in Form von Mobilgeräten vorhandene Energie in der Notbetriebsart zurückgegriffen werden kann.

Nach einer weiteren Lehre gemäß Anspruch 13, der eigenständige Bedeutung zukommt, wird eine Kraftfahrzeugtür mit einem Kraftfahrzeugschloss und einer vorschlagsgemäßen Steueranordnung als solche beansprucht. Auf alle Ausführungen zu der vorschlagsgemäßen Steueranordnung darf verwiesen werden.

Bei der bevorzugten Ausgestaltung gemäß Anspruch 13 stellt die Innenverkleidung der Kraftfahrzeugtür eine Ladestation für das Mobilgerät erster Art oder für das Mobilgerät zweiter Art bereit. Auch insoweit darf auf die Ausführungen zu der erstgenannten Lehre verwiesen werden.

Nach einer weiteren Lehre gemäß Anspruch 15, der ebenfalls eigenständige Bedeutung zukommt, wird ein Kraftfahrzeug mit mindestens einer vorschlagsgemäßen Kraftfahrzeugtür als solches beansprucht. Auf alle Ausführungen zu der vorschlagsgemäßen Kraftfahrzeugtür sowie zu der vorschlagsgemäßen Steueranordnung darf verwiesen werden.

Nach einer weiteren Lehre gemäß Anspruch 16, der ebenfalls eigenständige Bedeutung zukommt, wird ein Verfahren für die Ansteuerung einer Kraftfahrzeugtür mittels einer vorschlagsgemäßen Steueranordnung als solches beansprucht.

Bei dem vorschlagsgemäßen Verfahren wird die Steueranordnung im montierten Zustand aus einem Kraftfahrzeug-Bordnetz mit elektrischer Leistung versorgt. In der Notbetriebsart wird elektrische Leistung von einem Mobilgerät erster Art über die Leistungsübertragungseinheit empfangen.

Wesentlich für die vorschlagsgemäße Lehre ist, dass in der Notbetriebsart über die Leistungsübertragungseinheit elektrische Leistung drahtlos von dem Mobilgerät erster Art empfangen wird und dass mittels der Türsteuereinheit der Öffnungsantrieb mit der empfangenen elektrischen Leistung zum Ausheben der Sperrklinke angesteuert wird. Das vorschlagsgemäße Verfahren betrifft damit die Betriebsweise der vorschlagsgemäßen Steueranordnung, so dass auch insoweit auf die Ausführungen zu der vorschlagsgemäßen Steuereinheit verwiesen werden darf.

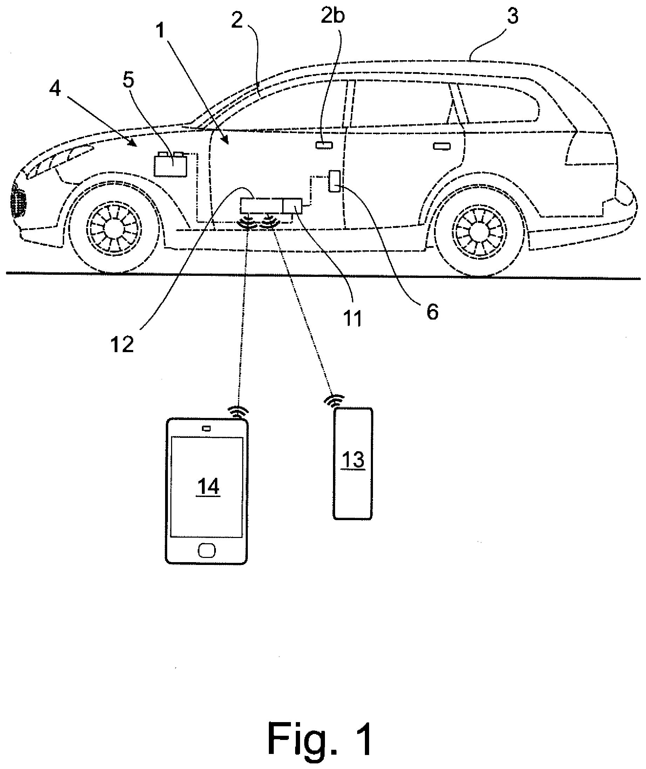

Im Folgenden wird die Erfindung anhand einer ein Ausführungsbeispiel darstellenden Zeichnung näher erläutert. In der Zeichnung zeigt
- Fig. 1: ein vorschlagsgemäßes Kraftfahrzeug mit einer vorschlagsgemäßen Steueranordnung in einer ganz schematischen Darstellung und
- Fig. 2: die Kraftfahrzeugtür des Kraftfahrzeugs gemäß Fig. 1, ebenfalls in einer ganz schematischen Darstellung.

Die vorschlagsgemäße Steueranordnung 1 ist einer Kraftfahrzeugtür 2 eines Kraftfahrzeugs 3 zugeordnet. Bei der Kraftfahrzeugtür 2 kann es sich um jedwede Kraftfahrzeugtür des Kraftfahrzeugs 3 handeln. Hier und vorzugsweise ist die Kraftfahrzeugtür 2 eine Seitentür, insbesondere eine vordere Seitentür, des Kraftfahrzeugs 3. Alle diesbezüglichen Ausführungen gelten für alle anderen Kraftfahrzeugtüren 2, insbesondere für die hinteren Kraftfahrzeugtüren oder für eine Hecktür, entsprechend.

Die Steueranordnung 1 versorgt sich im montierten Zustand aus einem Kraftfahrzeug-Bordnetz 4, das von einer Fahrzeugbatterie 5 gespeist wird, mit elektrischer Leistung.

Die Kraftfahrzeugtür 2 weist ein Kraftfahrzeugschloss 6 mit einem elektrischen Öffnungsantrieb 7 zum motorischen Öffnen des Kraftfahrzeugschlosses 6 auf. Hier und vorzugsweise ist das Kraftfahrzeugschloss 6 mit einem Sperrwerk 8 aus Schlossfalle 9 und Sperrklinke 10 ausgestattet. Für das motorische Öffnen des Kraftfahrzeugschlosses 6 ist der Öffnungsantrieb 7 antriebstechnisch mit der Sperrklinke 10 gekoppelt oder koppelbar, so dass sich die Sperrklinke 10 mittels des Öffnungsantriebs 7 motorisch ausheben lässt.

Die Steueranordnung 1 weist eine Türsteuereinheit 11 zur Ansteuerung des Öffnungsantriebs 7 auf. Die Türsteuereinheit 11 ist vorzugsweise mit einer Logikeinheit ausgestattet, die das motorische Öffnen des Kraftfahrzeugschlosses 6 koordiniert. Grundsätzlich kann die Türsteuereinheit 11 aber auch lediglich das Leitungsnetzwerk bereitstellen, das für die Bestromung des Öffnungsantriebs 7 erforderlich ist. Die Türsteuereinheit 11 kann bei einer weiteren Alternative von einem zentralen Türsteuersystem bereitgestellt werden, das die Öffnungsantriebe aller anderen Kraftfahrzeugtüren 2 entsprechend ansteuert.

Bei normalbetriebsgemäßem Gebrauch befindet sich die Steueranordnung 1 in einer Normalbetriebsart, in der das motorische Öffnen des Kraftfahrzeugschlosses 6 bedienergesteuert über elektrische Türbetätigungselemente 2a, 2b möglich ist.

Sobald die Steueranordnung 1 einen vorbestimmten Notfall erfasst, wechselt sie jedoch in eine Notbetriebsart. Der vorbestimmte Notfall entspricht beispielsweise einem zumindest teilweisen Ausfall der Bordnetzspannung. Die Erfassung des vorbestimmten Notfalls wird vorzugsweise mittels der Türsteuereinheit 11 vorgenommen.

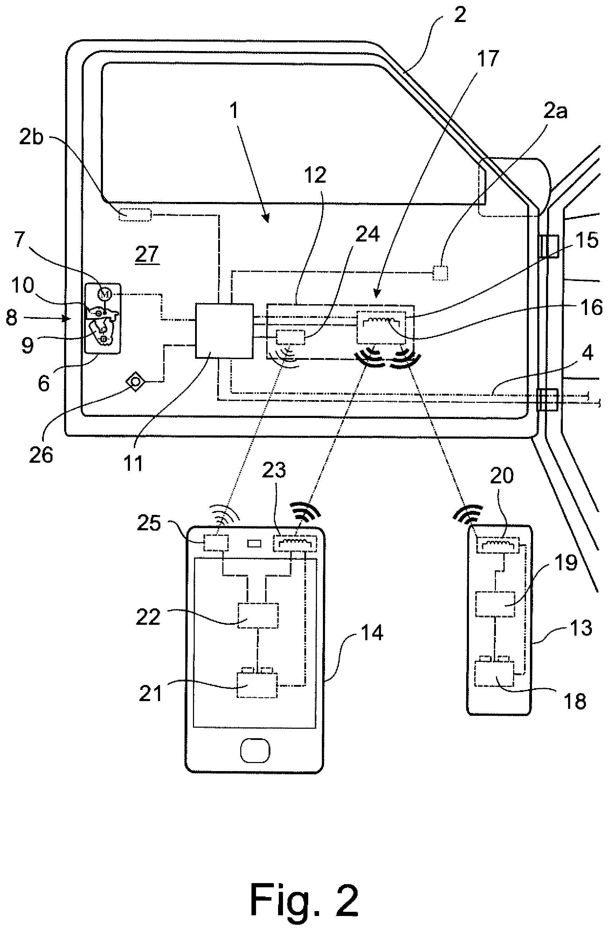

Fig. 2 zeigt, dass die Steueranordnung 1 auch eine Leistungsübertragungseinheit 12 aufweist, wobei in der Notbetriebsart der Empfang von elektrischer Leistung von einem Mobilgerät erster Art 13 über die Leistungsübertragungseinheit 12 vorgesehen ist.

Wesentlich ist nun, dass die Leistungsübertragungseinheit 12 für den drahtlosen Empfang von elektrischer Leistung von dem Mobilgerät erster Art 13 eingerichtet ist. Die drahtlose Übertragung elektrischer Leistung erfolgt vorliegend über eine induktive Kopplung oder eine kapazitive Kopplung. Hierfür sind bereits verschiedene Standards bekannt geworden, die bei der vorschlagsgemäßen Lösung vorzugsweise Anwendung finden. Beispiele hierfür sind der Qi-Standard, der PMA-Standard, der A4WP-Standard o.dgl.

Wesentlich ist weiter, dass die Türsteuereinheit 11 eingerichtet ist, in der Notbetriebsart über die Leistungsübertragungseinheit 12 elektrische Leistung von dem Mobilgerät erster Art 13 zu empfangen und mit der empfangenen elektrischen Leistung den Öffnungsantrieb 7 zum Öffnen des Kraftfahrzeugschlosses 6 anzusteuern. Bei dem Mobilgerät erster Art 13 handelt es sich vorzugsweise um einen mobilen Energiespeicher, insbesondere um eine Powerbank, wie noch erläutert wird.

Bei dem Kraftfahrzeugschloss 6 handelt es sich vorzugsweise um ein Elektroschloss, das ausschließlich elektrisch, also mittels des Öffnungsantriebs 7, geöffnet werden kann. Mit anderen Worten, lässt sich die Sperrklinke 10 ausschließlich mittels des Öffnungsantriebs 7 ausheben, und nicht etwa über eine mechanische Kraftwirkungskette zu einem Türinnengriff oder einem Türaußengriff. Bei einem solchen Elektroschloss ist die vorschlagsgemäße Lösung von besonderer Bedeutung, da die Funktionalität des Öffnungsantriebs 7 auch bei einem Ausfall der Bordnetzspannung sichergestellt sein muss.

Interessant bei dem dargestellten und insoweit bevorzugten Ausführungsbeispiel ist die Tatsache, dass die Leistungsübertragungseinheit 12 nicht nur für den Empfang von elektrischer Leistung, sondern auch für die Abgabe von elektrischer Leistung eingerichtet ist. Dies bedeutet, dass die Leistungsübertragungseinheit 12 zum Laden des Mobilgeräts erster Art 13 oder eines Mobilgeräts zweiter Art 14 für die drahtlose Abgabe von elektrischer Leistung an das jeweilige Mobilgerät 13, 14 in der Normalbetriebsart eingerichtet ist. Hierfür weist die Leistungsübertragungseinheit 12 eine drahtlose Sende-/Empfangseinheit 15 auf, die sowohl dem Empfang elektrischer Leistung, als auch der Abgabe elektrischer Leistung dient. Für den Fall, dass die Leistungsübertragungseinheit 12 mit einer induktiven Kopplung arbeitet, verfügt die Sende-/Empfangseinheit 15 über eine Spulenanordnung 16, die entsprechend doppelt, nämlich sowohl für den Empfang als auch für die Abgabe elektrischer Leistung genutzt wird. Von dieser abstrakten Darstellung ist natürlich umfasst, dass die elektrische Leistung zu ihrer Übertragung vorübergehend in magnetische Leistung umgewandelt wird.

Bei der obigen Doppelnutzung der Leistungsübertragungseinheit 12 ist es vorzugsweise so, dass die Leistungsübertragungseinheit 12 eine Ladestation 17 für das Mobilgerät erster Art 13 und/oder für das Mobilgerät zweiter Art 14 ausbildet, wobei das jeweilige Mobilgerät 13, 14, hier und vorzugsweise formschlüssig, in die Ladestation 17 einsetzbar ist bzw. sind. Dadurch ist gewährleistet, dass sich das betreffende Mobilgerät 13, 14 in leistungsübertragender Nähe zu der Leistungsübertragungseinheit 12 befindet. Das trägt dem Umstand Rechnung, dass die Leistungsübertragungseinheit 12 vorzugsweise für die Nahübertragung von elektrischer Leistung eingerichtet ist.

Das Mobilgerät erster Art 13 ist vorzugsweise zumindest für die drahtlose Abgabe elektrischer Leistung eingerichtet. Entsprechend handelt es sich bei dem Mobilgerät erster Art 13 vorzugsweise um eine oben angesprochene Powerbank o.dgl. Grundsätzlich kann es aber auch vorgesehen sein, dass das Mobilgerät erster Art 13 zusätzlich für den drahtlosen Empfang elektrischer Leistung eingerichtet ist. Auch insoweit kann es sich bei dem Mobilgerät erster Art 13 dann um eine Powerbank handeln. Denkbar ist aber schließlich auch, dass es sich bei dem Mobilgerät erster Art 13 um ein Mobiltelefon handelt, das sowohl für die drahtlose Abgabe elektrischer Leistung, als auch für den Empfang elektrischer Leistung, eingerichtet ist.

Das Mobilgerät zweiter Art 14 ist vorzugsweise zumindest für den drahtlosen Empfang elektrischer Leistung eingerichtet. Bei dem Mobilgerät zweiter Art 14 handelt es sich vorzugsweise um entsprechend ausgestattetes Mobiltelefon.

Fig. 2 zeigt ein Mobilgerät erster Art 13, das nach Art einer Powerbank ausgestaltet ist. Die Powerbank weist einen Energiespeicher 18 in Form eines Akkus, eine Ladesteuerung 19 sowie einen Ladeadapter 20 auf, der für die bidirektionale Übertragung elektrischer Leistung eingerichtet ist. Das Mobilgerät zweiter Art 14 ist hier als Mobiltelefon ausgestaltet, das einen Energiespeicher 21 in Form eines Akkus, eine Ladesteuerung 22 und einen Ladeadapter 23 aufweist, der ebenfalls für die bidirektionale Übertragung elektrischer Leistung eingerichtet ist. Zumindest ist es aber vorgesehen, dass der Ladeadapter 20 des Mobilgeräts erster Art 13 für die drahtlose Abgabe elektrischer Leistung eingerichtet ist und dass der Ladeadapter 23 des Mobilgeräts zweiter Art 14 für den drahtlosen Empfang elektrischer Leistung eingerichtet ist.

Um ein ungewünschtes Entladen eines im Nahbereich der Leistungsübertragungseinheit 12 befindlichen Mobilgeräts 13, 14 zu vermeiden, ist es vorzugsweise vorgesehen, dass Steueranordnung 1 über eine nicht dargestellte Ein-/Ausgabeeinheit und/oder über das betreffende Mobilgerät 13, 14 in der Notbetriebsart eine Quittierung durch den Bediener abfragt und erst nach der Quittierung den Empfang elektrischer Leistung über die Leistungsübertragungseinheit 12 freigibt. Diese Quittierungsfunktion der Steueranordnung 1 ist vorzugsweise in der Türsteuereinheit 11 implementiert.

Der Darstellung gemäß Fig. 2 ist ferner zu entnehmen, dass die Steueranordnung 1 ein elektrisches, weiter oben angesprochenes Türbetätigungselement 2a, 2b aufweist, wobei in der Notbetriebsart eine Ansteuerung des Öffnungsantriebs 7 durch eine Betätigung des betreffenden elektrischen Türbetätigungselements 2a, 2d auslösbar ist. Dies bedeutet, dass ein motorischen Öffnen des Kraftfahrzeugschlosses 6 beim Wechsel von der Normalbetriebsart in die Notbetriebsart nicht unvermittelt stattfindet, sondern dass das Öffnen des Kraftfahrzeugschlossen 6 wie an sich üblich erst durch die Betätigung eines elektrischen Türbetätigungselements 2a, 2b ausgelöst wird. Je nach Ausstattung der Kraftfahrzeugtür 2 kann es sich hier um ein vom Innenraum des Kraftfahrzeugs 3 betätigbares Türbetätigungselement 2a und/oder um ein von außerhalb des Kraftfahrzeugs 3 betätigbares Türbetätigungselement 2b handeln.

Der Leistungsübertragungseinheit 12 kommt hier und vorzugsweise eine weitere Funktion zu, nämlich die Funktion des Aufbaus einer drahtlosen Kommunikationsstrecke. Die Leistungsübertragungseinheit 12 weist entsprechend eine Kommunikationseinheit 24 auf, mit der sich eine Kommunikationsstrecke zu dem jeweiligen Mobilgerät 14 aufbauen lässt. Vorzugsweise handelt es sich dabei um das Mobilgerät zweiter Art 14, das über eine korrespondierende Kommunikationseinheit 25 verfügt. Bei dem dargestellten und insoweit bevorzugten Ausführungsbeispiel ist die Kommunikationseinheit 24 der Leistungsübertragungseinheit 12 separat von der Sende-/Empfangseinheit 15 ausgestaltet. In besonders bevorzugter Ausgestaltung ist es allerdings vorgesehen, dass die Kommunikationseinheit 24 von der Sende-/Empfangseinheit 15 selbst bereitgestellt wird. Dabei erfolgt die Übertragung der elektrischen Leistung und der Aufbau der Kommunikationsstrecke in besonders bevorzugter Ausgestaltung über ein und dieselbe Übertragungshardware. Dies führt zu einem hardwaretechnisch besonders einfachen Aufbau.

Für den Fall, dass der Aufbau einer oben angesprochenen Kommunikationsstrecke zwischen Mobilgerät 13, 14 und der Leistungsübertragungseinheit 12 vorgesehen ist, ergibt sich eine weitere Möglichkeit der Vermeidung eines ungewünschtes Entladens des betreffenden Mobilgeräts 13, 14. Dabei erfolgt der Empfang von elektrischer Leistung über die Leistungsübertragungseinheit 12 vorzugsweise erst nach Aufbau der Kommunikationsstrecke und insbesondere erst nach erfolgreicher Durchführung einer Authentifizierungsabfrage über die Kommunikationsstrecke. Dies bedeutet, dass der Empfang der elektrischen Leistung von der Leistungsübertragungseinheit 12 erst nach erfolgreicher Durchführung der Authentifizierungsabfrage über die Kommunikationsstrecke freigegeben wird.

Fig. 2 zeigt, dass die Leistungsübertragungseinheit 12 die empfangene elektrische Leistung ohne Zwischenspeicherung in einem Energie-Zwischenspeicher an die Türsteuereinheit 11 weiterleitet. Alternativ oder zusätzlich kann es vorgesehen sein, dass die empfangene elektrische Leistung ohne Zwischenspeicherung in einem Energie-Zwischenspeicher an den Öffnungsantrieb 7 weitergeleitet wird.

Vorteilhaft dabei ist die einfache Realisierung, da auf einen Energie-Zwischenspeicher verzichtet werden kann. Ferner ist ein Energieverlust, der mit dem Laden und Entladen eines Energie-Zwischenspeichers stets verbunden ist, nicht vorhanden.

Alternativ kann es dagegen vorgesehen sein, dass die Leistungsübertragungseinheit 12 die empfangene elektrische Leistung an einen Energie-Zwischenspeicher weiterleitet, der der elektrischen Versorgung der Türsteuereinheit 11 und/oder des Öffnungsantriebs 7 dient. Dies ist zwar hardwaretechnisch aufwendiger. Allerdings ergibt sich dadurch die Möglichkeit, die elektrische Versorgung der Türsteuereinheit 11 und/oder des Öffnungsantriebs 7 unabhängig von etwaigen Schwankungen in der empfangenen elektrischen Leistung bereitzustellen.

Für die Definition des vorbestimmten Notfalls, auf dessen Erfassung hin die Steueranordnung 1 von der Normalbetriebsart in die Notbetriebsart wechselt, sind verschiedene vorteilhafte Varianten denkbar. Hier und vorzugsweise ist der vorbestimmte Notfall dadurch definiert, dass die Steueranordnung1 ein Crashsignal von einem Crashsensor 26 empfängt. Fig. 2 zeigt einen solchen Crashsensor 26, der insbesondere der Erfassung eines Seitenaufpralls dient.

Alternativ oder zusätzlich ist ein vorbestimmter Notfall dadurch definiert, dass die Bordnetzspannung unter eine vorbestimmte Mindestschwelle fällt. Andere Arten vorbestimmter Notfälle sind denkbar.

Um sicherzustellen, dass insbesondere im Crashfall alle im Innenraum des Kraftfahrzeugs vorhandenen Energiequellen in Form von Mobilgeräten 13, 14 für das motorische Öffnen des Kraftfahrzeugschlosses 6 zur Verfügung stehen, gibt die Steueranordnung 1 in der Notbetriebsart über eine nichtdargestellte Ein-/Ausgabeeinheit vorzugsweise eine Aufforderung an den Bediener aus, ein Mobilgerät 13, 14 in die Ladestation 17 einzusetzen. Hier kann dieselbe Ein-/Ausgabeeinheit Anwendung finden, die eventuell für eine oben angesprochene Quittierung realisiert ist.

Nach einer weiteren Lehre, der eigenständige Bedeutung zukommt, wird die Kraftfahrzeugtür 3 als solche beansprucht, die ein Kraftfahrzeugschloss 6 und eine vorschlagsgemäße Steueranordnung 1 aufweist. Insoweit darf auf alle Ausführungen zu der Steueranordnung 1 verwiesen werden.

In besonders bevorzugter Ausgestaltung ist die Steueranordnung 1 auf den Empfang elektrischer Leistung vom Innenraum des Kraftfahrzeugs eingerichtet. Vor diesem Hintergrund ist es vorzugsweise so, dass die oben angesprochene Ladestation 17 von einer Innenverkleidung 27 der Kraftfahrzeugtür 2 ausgebildet ist.

Nach einer weiteren Lehre, der ebenfalls eigenständige Bedeutung zukommt, wird das Kraftfahrzeug 3 mit mindestens einer oben angesprochenen Kraftfahrzeugtür 3 als solches beansprucht. Auch insoweit darf auf alle Ausführungen zu der Kraftfahrzeugtür 2 sowie der vorschlagsgemäßen Steueranordnung 1 verwiesen werden.

Bei dem vorschlagsgemäßen Kraftfahrzeug 3 kann eine obige Ladestation 17 an einer Kraftfahrzeugtür 2 oder an mehreren Kraftfahrzeugtüren 2 angeordnet sein. Alternativ oder zusätzlich kann die Ladestation 17 aber auch an anderer Stelle im Innenraum des Kraftfahrzeugs, insbesondere an einer Mittelkonsole des Kraftfahrzeugs, angeordnet sein.

Nach einer weiteren Lehre, der ebenfalls eigenständige Bedeutung zukommt, wird ein Verfahren für die Ansteuerung einer vorschlagsgemäßen Kraftfahrzeugtür 2 mittels einer vorschlagsgemäßen Steueranordnung 1 als solches beansprucht.

Nach dem vorschlagsgemäßen Verfahren wird in der Notbetriebsart über die Leistungsübertragungseinheit 12 elektrische Leistung drahtlos von dem Mobilgerät erster Art 13 empfangen, wobei mittels der Türsteuereinheit 11 der Öffnungsantrieb 7 mit der empfangenen elektrischen Leistung zum Öffnen des Kraftfahrzeugschlosses 6 angesteuert wird. Auch insoweit darf auf alle Ausführungen zu der vorschlagsgemäßen Kraftfahrzeugtür 2 sowie der vorschlagsgemäßen Steueranordnung 1 verwiesen werden.

## Patentansprüche

1. Steueranordnung für eine Kraftfahrzeugtür (2), wobei sich die Steueranordnung (1) im montierten Zustand aus einem Kraftfahrzeug-Bordnetz (4) mit elektrischer Leistung versorgt, wobei die Kraftfahrzeugtür (2) ein Kraftfahrzeugschloss (6) mit einem elektrischen Öffnungsantrieb (7) zum motorischen Öffnen des Kraftfahrzeugschlosses (6) aufweist, wobei die Steueranordnung (1) eine Türsteuereinheit (11) zur Ansteuerung des Öffnungsantriebs (7) aufweist, wobei die Steueranordnung (1) von einer Normalbetriebsart in eine Notbetriebsart wechselt, wenn die Steueranordnung (1) einen vorbestimmten Notfall erfasst, **dadurch gekennzeichnet,**
**dass** die Steueranordnung (1) eine Leistungsübertragungseinheit (12) aufweist,
wobei in der Notbetriebsart der Empfang von elektrischer Leistung von einem Mobilgerät erster Art (13) über die Leistungsübertragungseinheit (12) vorgesehen ist,
**dass** die Leistungsübertragungseinheit (12) für den drahtlosen Empfang von elektrischer Leistung von dem Mobilgerät erster Art (13) eingerichtet ist und dass die Türsteuereinheit (11) eingerichtet ist, in der Notbetriebsart über die Leistungsübertragungseinheit (12) elektrische Leistung von dem Mobilgerät erster Art (13) zu empfangen und mit der empfangenen elektrischen Leistung den Öffnungsantrieb (7) zum Öffnen des Kraftfahrzeugschlosses (6) anzusteuern.

2. Steueranordnung nach Anspruch 1, **dadurch gekennzeichnet, dass** die Leistungsübertragungseinheit (12) zum Laden des Mobilgeräts erster Art (13) oder eines Mobilgeräts zweiter Art (14) für die drahtlose Abgabe von elektrischer Leistung an das jeweilige Mobilgerät (13, 14) in der Normalbetriebsart eingerichtet ist, vorzugsweise, dass die Leistungsübertragungseinheit (12) eine drahtlose Sende-/Empfangseinheit (15) aufweist, die sowohl dem Empfang von elektrischer Leistung als auch der Abgabe elektrischer Leistung dient.

3. Steueranordnung nach Anspruch 2, **dadurch gekennzeichnet, dass** die Leistungsübertragungseinheit (12) eine Ladestation (17) für das Mobilgerät erster Art (13) und/oder für das Mobilgerät zweiter Art (14) ausbildet und dass das Mobilgerät (13, 14), insbesondere formschlüssig, in die Ladestation (17) einsetzbar ist und dadurch in leistungsübertragende Nähe zu der Leistungsübertragungseinheit (12) bringbar ist.

4. Steueranordnung nach einem der vorhergehenden Ansprüche, **dadurch gekennzeichnet, dass** das Mobilgerät erster Art (13) für die drahtlose Abgabe elektrischer Leistung eingerichtet ist, vorzugsweise, dass das Mobilgerät erster Art (13) zusätzlich für den drahtlosen Empfang elektrischer Leistung eingerichtet ist.

5. Steueranordnung nach Anspruch 2 und ggf. nach Anspruch 3 oder 4, **dadurch gekennzeichnet, dass** das Mobilgerät zweiter Art (14) für den drahtlosen Empfang elektrischer Leistung eingerichtet ist.

6. Steueranordnung nach einem der vorhergehenden Ansprüche, **dadurch gekennzeichnet, dass** die Steueranordnung (1) über eine Ein-/Ausgabeeinheit und/oder das Mobilgerät (13, 14) in der Notbetriebsart eine Quittierung durch den Bediener abfragt und erst nach der Quittierung den Empfang elektrischer Leistung über die Leistungsübertragungseinheit (12) freigibt.

7. Steueranordnung nach einem der vorhergehenden Ansprüche, **dadurch gekennzeichnet, dass** die Steueranordnung (1) ein elektrisches Türbetätigungselement (2a, 2b) aufweist und dass in der Notbetriebsart eine Ansteuerung des Öffnungsantriebs (7) durch eine Betätigung des elektrischen Türbetätigungselements (2a, 2b) auslösbar ist.

8. Steueranordnung nach einem der vorhergehenden Ansprüche, **dadurch gekennzeichnet, dass** die Leistungsübertragungseinheit (12) eingerichtet ist, eine drahtlose Kommunikationsstrecke zu dem Mobilgerät (13, 14) aufzubauen und dass die Leistungsübertragungseinheit (12) den Empfang von elektrischer Leistung erst nach Aufbau der Kommunikationsstrecke, vorzugsweise erst nach erfolgreicher Durchführung einer Authentifizierungsabfrage über die Kommunikationsstrecke, freigibt.

9. Steueranordnung nach einem der vorhergehenden Ansprüche, **dadurch gekennzeichnet, dass** die Leistungsübertragungseinheit (12) die empfangene elektrische Leistung ohne Zwischenspeicherung in einem Energie-Zwischenspeicher an die Türsteuereinheit (11) und/oder den Öffnungsantrieb (7) weiterleitet.

10. Steueranordnung nach einem der Ansprüche 1 bis 8, **dadurch gekennzeichnet, dass** die Leistungsübertragungseinheit (12) die empfangene elektrische Leistung an einen Energie-Zwischenspeicher weiterleitet, der der elektrischen Versorgung der Türsteuereinheit (11) und/oder des Öffnungsantriebs (7) dient.

11. Steueranordnung nach einem der vorhergehenden Ansprüche, **dadurch gekennzeichnet, dass** ein vorbestimmter Notfall dadurch definiert ist, dass die Steueranordnung (1) ein Crashsignal von einem Crashsensor (26) empfängt, und/oder, dass ein vorbestimmter Notfall dadurch definiert ist, dass die Bordnetzspannung unter eine vorbestimmte Mindestschwelle fällt.

12. Steueranordnung nach Anspruch 3 und ggf. nach einem der Ansprüche 4 bis 11, **dadurch gekennzeichnet, dass** die Steueranordnung (1) in der Notbetriebsart über eine Ein-/Ausgabeeinheit eine Aufforderung an den Bediener ausgibt, ein Mobilgerät (13, 14) in die Ladestation (17) einzusetzen.

13. Kraftfahrzeugtür mit einem Kraftfahrzeugschloss (6) und einer Steueranordnung (1) nach einem der vorhergehenden Ansprüche.

14. Kraftfahrzeugtür nach Anspruch 13, **dadurch gekennzeichnet, dass** die Leistungsübertragungseinheit (12) eine Ladestation (17) für das Mobilgerät erster Art (13) oder für ein Mobilgerät zweiter Art (14) ausbildet, dass das jeweilige Mobilgerät (13, 14), insbesondere formschlüssig, in die Ladestation (17) einsetzbar ist und dadurch in leistungsübertragende Nähe zu der Leistungsübertragungseinheit (12) bringbar ist, dass die Kraftfahrzeugtür (2) eine Innenverkleidung aufweist (27) und dass die Innenverkleidung (27) die Ladestation (17) ausbildet.

15. Kraftfahrzeug mit mindestens einer Kraftfahrzeugtür (2) nach Anspruch 13 oder 14.

16. Verfahren für die Ansteuerung einer Kraftfahrzeugtür (2) mittels einer Steueranordnung (1), wobei die Steueranordnung (1) im montierten Zustand aus einem Kraftfahrzeug-Bordnetz (4) mit elektrischer Leistung versorgt wird, wobei die Kraftfahrzeugtür (2) einen elektrischen Öffnungsantrieb (7) zum motorischen Öffnen des Kraftfahrzeugschlosses (6) aufweist,
wobei die Steueranordnung (1) eine Türsteuereinheit (11) zur Ansteuerung des Öffnungsantriebs (7) aufweist,
wobei die Steueranordnung (1) von einer Normalbetriebsart in eine Notbetriebsart wechselt, wenn die Steueranordnung (1) einen vorbestimmten Notfall erfasst, **dadurch gekennzeichnet,**
**dass** die Steueranordnung (1) eine Leistungsübertragungseinheit (12) aufweist, wobei in der Notbetriebsart elektrische Leistung von einem Mobilgerät erster Art (13) über die Leistungsübertragungseinheit (12) empfangen wird,
**dass** in der Notbetriebsart über die Leistungsübertragungseinheit (12) elektrische Leistung drahtlos von dem Mobilgerät erster Art (13) empfangen wird und dass mittels der Türsteuereinheit (11) der Öffnungsantrieb (7) mit der empfangenen elektrischen Leistung zum Öffnen des Kraftfahrzeugschlosses (6) angesteuert wird.

## Claims

1. Control arrangement for a motor vehicle door (2), wherein in the assembled state the control arrangement (1) is supplied with electrical power from a motor vehicle on-board network (4), wherein the motor vehicle door (2) has a motor vehicle lock (6) with an electric opening drive (7) for the motorized opening of the motor vehicle lock (6), wherein the control arrangement (1) has a door control unit (11) for controlling the opening drive (7),
wherein the control arrangement (1) changes from a normal operating mode to an emergency operating mode if the control arrangement (1) detects a predetermined emergency situation,
**characterized**
**in that** the control arrangement (1) has a power transmission unit (12), wherein in the emergency operating mode the reception of electrical power from a mobile device of a first type (13) via the power transmission unit (12) is provided,
**in that** the power transmission unit (12) is set up for the wireless reception of electrical power from the mobile device of the first type (13) and in that the door control unit (11) is set up to receive electrical power from the mobile device of the first type (13) via the power transmission unit (12) in the emergency operating mode and to control the opening drive (7) to open the motor vehicle lock (6) using the received electrical power.

2. Control arrangement according to Claim 1, **characterized in that** the power transmission unit (12) is set up to charge the mobile device of the first type (13) or a mobile device of a second type (14) for the wireless delivery of electrical power to the respective mobile device (13, 14) in the normal operating mode, preferably **in that** the power transmission unit (12) has a wireless transmitting/receiving unit (15) which is used for both the reception of electrical power and the delivery of electrical power.

3. Control arrangement according to Claim 2, **characterized in that** the power transmission unit (12) forms a charging station (17) for the mobile device of the first type (13) and/or for the mobile device of the second type (14) and **in that** the mobile device (13, 14) can be placed in the charging station (17), in particular in a form-fitting manner, and can therefore be brought into power-transmitting proximity to the power transmission unit (12).

4. Control arrangement according to any one of the preceding claims, **characterized in that** the mobile device of the first type (13) is set up for the wireless delivery of electrical power, preferably **in that** the mobile device of the first type (13) is additionally set up for the wireless reception of electrical power.

5. Control arrangement according to Claim 2 and, where applicable, Claim 3 or 4, **characterized in that** the mobile device of the second type (14) is set up for the wireless reception of electrical power.

6. Control arrangement according to any one of the preceding claims, **characterized in that** the control arrangement (1) calls up a confirmation by the operator via an input/output unit and/or the mobile device (13, 14) in the emergency operating mode and only enables the reception of electrical power via the power transmission unit (12) after the confirmation.

7. Control arrangement according to any one of the preceding claims, **characterized in that** the control arrangement (1) has an electric door actuating element (2a, 2b) and **in that** in the emergency operating mode operation of the opening drive (7) is triggerable by actuation of the electric door actuating element (2a, 2b).

8. Control arrangement according to any one of the preceding claims, **characterized in that** the power transmission unit (12) is set up to establish a wireless communication path to the mobile device (13, 14) and **in that** the power transmission unit (12) enables the reception of electrical power only after the establishment of the communication path, preferably only after successful execution of an authentication query via the communication path.

9. Control arrangement according to any one of the preceding claims, **characterized in that** the power transmission unit (12) passes the received electrical power on to the door control unit (11) and/or the opening drive (7) without buffering in an energy buffer.

10. Control arrangement according to any one of Claims 1 to 8, **characterized in that** the power transmission unit (12) passes the received electrical power on to an energy buffer, which is used for the electrical supply of the door control unit (11) and/or the opening drive (7).

11. Control arrangement according to any one of the preceding claims, **characterized in that** a predetermined emergency is defined by the fact that the control arrangement (1) receives a crash signal from a crash sensor (26), and/or **in that** a predetermined emergency is defined by the fact that the on-board network voltage falls below a predetermined minimum threshold.

12. Control arrangement according to Claim 3 and, if applicable, according to any one of Claims 4 to 11, **characterized in that** in the emergency operating mode the control arrangement (1) outputs an invitation to the operator via an input/output unit to insert a mobile device (13, 14) into the charging station (17).

13. Motor vehicle door with a motor vehicle lock (6) and a control arrangement (1) according to any one of the preceding claims.

14. Motor vehicle door according to Claim 13, **characterized in that** the power transmission unit (12) forms a charging station (17) for the mobile device of the first type (13) or for a mobile device of a second type (14), **in that** the respective mobile device (13, 14) can be inserted into the charging station (17), in particular in a form-fitting manner, and can thus be brought into power-transmitting proximity to the power transmission unit (12), **in that** the motor vehicle door (2) has an inner trim (27) and **in that** the inner trim (27) forms the charging station (17).

15. Motor vehicle with at least one motor vehicle door (2) according to Claim 13 or 14.

16. Method for the control of a motor vehicle door (2) by means of a control arrangement (1), wherein in the assembled state the control arrangement (1) is supplied with electrical power from a motor vehicle on-board network (4), wherein the motor vehicle door (2) has an electric opening drive (7) for the motorized opening of the motor vehicle lock (6),
wherein the control arrangement (1) has a door control unit (11) for controlling the opening drive (7),
wherein the control arrangement (1) changes from a normal operating mode to an emergency operating mode if the control arrangement (1) detects a predetermined emergency situation,
**characterized**
**in that** the control arrangement (1) has a power transmission unit (12), wherein in the emergency operating mode electrical power is received from a mobile device of a first type (13) via the power transmission unit (12),
**in that** in the emergency operating mode electrical power is received wirelessly from the mobile device of the first type (13) via the power transmission unit (12) and in that the opening drive (7) is controlled by means of the door control unit (11) to open the motor vehicle lock (6) using the received electrical power.

## Revendications

1. Ensemble de commande pour une portière de véhicule automobile (2), dans lequel l'ensemble de commande (1) s'alimente en puissance électrique, à l'état monté, à partir d'un réseau de bord de véhicule automobile (4), la portière de véhicule automobile (2) comportant une serrure de véhicule automobile (6) pourvue d'un entraînement d'ouverture électrique (7) pour l'ouverture motorisée de la serrure de véhicule automobile (6), l'ensemble de commande (1) comportant une unité de commande de portière (11) pour piloter l'entraînement d'ouverture (7),
l'ensemble de commande (1) passant d'un mode de fonctionnement normal à un mode de fonctionnement d'urgence lorsque l'ensemble de commande (1) détecte une situation d'urgence prédéterminée,
**caractérisé**
**en ce que** l'ensemble de commande (1) comporte une unité de transmission de puissance (12), la réception de puissance électrique en provenance d'un appareil mobile de premier type (13) par l'intermédiaire de l'unité de transmission de puissance (12) étant prévue dans le mode de fonctionnement d'urgence,
**en ce que** l'unité de transmission de puissance (12) est conçue pour la réception sans fil de puissance électrique en provenance de l'appareil mobile de premier type (13), et en ce que l'unité de commande de portière (11) est conçue pour la réception, dans le mode de fonctionnement d'urgence, par l'intermédiaire de l'unité de transmission de puissance (12), de puissance électrique en provenance de l'appareil mobile de premier type (13) et pour piloter, avec la puissance électrique reçue, l'entraînement d'ouverture (7) afin d'ouvrir la serrure de véhicule automobile (6).

2. Ensemble de commande selon la revendication 1, **caractérisé en ce que** l'unité de transmission de puissance (12) est conçue pour charger l'appareil mobile de premier type (13) ou un appareil mobile de second type (14) pour la délivrance sans fil de puissance électrique à l'appareil mobile (13, 14) respectif dans le mode de fonctionnement normal, de préférence **en ce que** l'unité de transmission de puissance (12) comporte une unité d'émission/réception sans fil (15) qui sert tant à la réception de puissance électrique qu'à la délivrance de puissance électrique.

3. Ensemble de commande selon la revendication 2, **caractérisé en ce que** l'unité de transmission de puissance (12) constitue une station de charge (17) pour l'appareil mobile de premier type (13) et/ou pour l'appareil mobile de second type (14), et **en ce que** l'appareil mobile (13, 14) peut être inséré, en particulier par complémentarité de formes, dans la station de charge (17) et peut ainsi être amené à proximité de transmission de puissance par rapport à l'unité de transmission de puissance (12).

4. Ensemble de commande selon l'une quelconque des revendications précédentes, **caractérisé en ce que** l'appareil mobile de premier type (13) est conçu pour la délivrance sans fil de puissance électrique, de préférence **en ce que** l'appareil mobile de premier type (13) est en outre conçu pour la réception sans fil de puissance électrique.

5. Ensemble de commande selon la revendication 2 et le cas échéant selon la revendication 3 ou 4, **caractérisé en ce que** l'appareil mobile de second type (14) est conçu pour la réception sans fil de puissance électrique.

6. Ensemble de commande selon l'une quelconque des revendications précédentes, **caractérisé en ce que** l'ensemble de commande (1) interroge, par l'intermédiaire d'une unité d'entrée/sortie et/ou de l'appareil mobile (13, 14), un acquittement par l'opérateur dans le mode de fonctionnement d'urgence et ne libère la réception de puissance électrique par l'intermédiaire de l'unité de transmission de puissance (12) qu'après l'acquittement.

7. Ensemble de commande selon l'une quelconque des revendications précédentes, **caractérisé en ce que** l'ensemble de commande (1) comporte un élément d'actionnement de portière électrique (2a, 2b) et **en ce que**, dans le mode de fonctionnement d'urgence, un pilotage de l'entraînement d'ouverture (7) peut être déclenché par un actionnement de l'élément d'actionnement de portière électrique (2a, 2b).

8. Ensemble de commande selon l'une quelconque des revendications précédentes, **caractérisé en ce que** l'unité de transmission de puissance (12) est conçue pour établir une liaison de communication sans fil avec l'appareil mobile (13, 14) et **en ce que** l'unité de transmission de puissance (12) ne libère la réception de puissance électrique qu'après l'établissement de la liaison de communication, de préférence seulement après l'exécution réussie d'une interrogation d'authentification par l'intermédiaire de la liaison de communication.

9. Ensemble de commande selon l'une quelconque des revendications précédentes, **caractérisé en ce que** l'unité de transmission de puissance (12) transmet la puissance électrique reçue à l'unité de commande de portière (11) et/ou à l'entraînement d'ouverture (7) sans stockage intermédiaire dans un accumulateur d'énergie intermédiaire.

10. Ensemble de commande selon l'une quelconque des revendications 1 à 8, **caractérisé en ce que** l'unité de transmission de puissance (12) transmet la puissance électrique reçue à un accumulateur d'énergie intermédiaire qui sert à l'alimentation électrique de l'unité de commande de portière (11) et/ou de l'entraînement d'ouverture (7).

11. Ensemble de commande selon l'une quelconque des revendications précédentes, **caractérisé en ce qu'**une situation d'urgence prédéterminée est définie par le fait que l'ensemble de commande (1) reçoit un signal de collision en provenance d'un capteur de collision (26) et/ou par le fait que la tension du réseau de bord s'abaisse en dessous d'un seuil minimal prédéterminé.

12. Ensemble de commande selon la revendication 3 et le cas échéant selon l'une quelconque des revendications 4 à 11, **caractérisé en ce que** l'ensemble de commande (1) délivre, dans le mode de fonctionnement d'urgence, par l'intermédiaire d'une unité d'entrée/sortie, une invitation à l'opérateur d'insérer un appareil mobile (13, 14) dans la station de charge (17).

13. Portière de véhicule automobile comportant une serrure de véhicule automobile (6) et un ensemble de commande (1) selon l'une des revendications précédentes.

14. Portière de véhicule automobile selon la revendication 13, **caractérisée en ce que** l'unité de transmission de puissance (12) constitue une station de charge (17) pour l'appareil mobile de premier type (13) ou pour un appareil mobile de second type (14), **en ce que** l'appareil mobile (13, 14) respectif peut être inséré, en particulier par complémentarité de formes, dans la station de charge (17) et peut ainsi être amené à proximité de transmission de puissance par rapport à l'unité de transmission de puissance (12), **en ce que** la portière de véhicule automobile (2) présente un habillage intérieur (27) et **en ce que** l'habillage intérieur (27) constitue la station de charge (17).

15. Véhicule automobile comportant au moins une portière de véhicule automobile (2) selon la revendication 13 ou 14.

16. Procédé pour le pilotage d'une portière de véhicule automobile (2) au moyen d'un ensemble de commande (1), l'ensemble de commande (1) étant alimenté en puissance électrique, à l'état monté, à partir d'un réseau de bord de véhicule automobile (4), la portière (2) de véhicule automobile comportant un entraînement électrique d'ouverture (7) pour l'ouverture motorisée de la serrure de véhicule automobile (6),
l'ensemble de commande (1) comportant une unité de commande de portière (11) pour piloter l'entraînement d'ouverture (7),
l'ensemble de commande (1) passant d'un mode de fonctionnement normal à un mode de fonctionnement d'urgence lorsque l'ensemble de commande (1) détecte une situation d'urgence prédéterminée,
**caractérisé**
**en ce que** l'ensemble de commande (1) comporte une unité de transmission de puissance (12), de la puissance électrique étant reçue en provenance d'un appareil mobile de premier type (13) par l'intermédiaire de l'unité de transmission de puissance (12) dans le mode de fonctionnement d'urgence,
**en ce que**, dans le mode de fonctionnement d'urgence, de la puissance électrique est reçue sans fil en provenance de l'appareil mobile de premier type (13) par l'intermédiaire de l'unité de transmission de puissance (12) et en ce que l'entraînement d'ouverture (7) est piloté par l'unité de commande de portière (11) avec la puissance électrique reçue pour ouvrir la serrure de véhicule automobile (6).
